# EUROPEAN PATENT APPLICATION

(11) **EP 1 414 089 A1**
(43) Date of publication of application: **28.04.2004**
(21) Application number: 03256729.9
(22) Date of filing: 24.10.2003
(51) Int. Cl.: H01M 4/86, B01J 23/52, H01M 4/90

(54) **Fuel cell and gold anode catalyst therefor**

(30) Priority: 25.10.2002 JP 2002310555
(71) Applicant: National Institute of Advanced Industrial Science and Technology, Ikeda, Osaka 563-8577 (JP)
(72) Inventor: Ueda, A. Nat. Inst. of Adv. Ind. Sc. & Tech., Ikeda, Osaka 563-8577 (JP); Yamada, Y. Nat. Inst. of Adv. Ind. Sc. & Tech., Ikeda, Osaka 563-8577 (JP); Kobayashi, T. Nat. Inst. of Adv. Ind. Sc. & Tech., Ikeda, Osaka 563-8577 (JP); Fujiwara, N. Nat. Inst. of Adv. Ind. Sc. & Tech., Ikeda, Osaka 563-8577 (JP); Ukita, K. Nat. Inst. of Adv. Ind. Sc. & Tech., Ikeda, Osaka 563-8577 (JP)
(74) Representative: Cross, Rupert Edward Blount

(57) **Abstract**

An anode catalyst contains gold fine particles, and/or at least one member selected from the group consisting of titanium, vanadium, gallium, zirconium, niobium, cerium, tantalum, indium, and the oxides of these metals, and/or at least one member selected from the group consisting of platinum, ruthenium, and ruthenium oxides are coated on a conductive support.

## Description

### Technical Field of the Invention

The present invention relates to a fuel cell and an anode therefor.

### Description of Related Art

A fuel cell is a device to directly take out electric energy by electrochemically reacting hydrogen, ethanol etc., and therefore it is gentle with the global environment, and saves'energy. Therefore, use of such a fuel cell spreads out in various fields. For example, the fuel cell is expected to be used as a large-scale power supply, a distributed type power supply, a power supply for a fuel cell car, and a power supply used for various portable devices and so on.

The fuel cell has a structure in which an electrolyte is usually placed between two electrodes, an anode and a cathode. A proton-exchange membrane fuel cell in which a proton exchange membrane (a polymer type proton conductive film) is used as a catalyst in such a fuel cell, has the characteristics that (1) the fuel cell operates at low temperature in the room temperature to 100 degrees Celsius range, (2) all the component materials thereof is solid, and (3) reduction in size and weight can be accomplished. Therefore, it is expected a lot to be put to practical use in the fields of a distributed type power supply, a household power supply, a power supply for a fuel cell car, a power supply for various portable devices (a portable personal computer, a cellular phone, a digital camera, a PDA and so on).

Generally, a proton exchange membrane fuel cell (a solid polymer type fuel cell) has an electrode junction body in which an anode (anode catalyst + current collector material) and a cathode (cathode catalyst + current collector material) are joined at one end of the proton exchange membrane and the other end thereof, respectively.

In the proton-exchange membrane fuel cell having such a structure, on the anode side, reaction separates hydrogen (H2) into protons (H+) and electrons (e-). Platinum is known as the best catalyst material for accelerating the reaction. Platinum powder is usually coated on carbon powder having function of a support for the current collector, and the platinum powder coated on the carbon powder is hot-pressed with the proton exchange membrane so as to obtain a junction body.

Furthermore, as a catalyst containing platinum, a catalyst in which ruthenium is mixed with platinum, a catalyst in which vanadium oxide is mixed with platinum, a catalyst in which titanium oxide is mixed with platinum, and a catalyst in which molybdenum oxide is mixed with platinum and so on are known. See, for example, Yasuda, ENVIRONMENTAL CATALYST HANDBOOK 819-924 (NTS Publishing 2001); T. Toda et al., 146 JOURNALS OF ELECTROCHEMICAL SOCIETY, 3350 (1999); H.A. Gasteiger et al., 99 JOURNALS OF PHISICAL CHEMISTRY, 8945 (1995); T. Ioroi et al., 99 ELECTROCHEMISTRY COMMUNICATIONS 442-446 (2002).

However, since in the conventional anode, a large amount of platinum which is expensive and limited natural resource, is needed to be used for the catalyst, a catalyst having the excellent performance, which is alternative to the conventional one, is desired to be found.

As the hydrogen which is fuel, reformed gas which is obtained by reaction of the hydrocarbon such as natural gas, petroleum, coal and the like with steam is often used. The reformed gas includes, in addition to the hydrogen, carbon monoxide, carbon dioxide, steam, unreacted hydrocarbon and so on. Specially, the carbon monoxide is adsorbed on the surface of platinum which is catalyst material, thereby remarkably deteriorating the electricity generation performance. Therefore, the development of the catalyst material which can maintain excellent catalyst activities even in the presence of the carbon monoxide is desired.

### Summary of the Invention

In view of the above problems, it is an object of the present invention to proven a new catalyst having excellent performance as an anode catalyst for a fuel cell.

It is an object of the present invention to provide a fuel cell thereof.

It is a further object of the present invention to provide a new catalyst material(s) for a fuel cell capable of maintaining the excellent catalyst activities even in an atmosphere containing carbon monoxide.

It is still further object of the present invention to provide new catalyst materials less expensive than platinum.

As the result of researches by the inventors of the present invention to solve the above problem, it is found that gold particles have the excellent performance as an anode catalyst of the fuel cell, and excellent catalyst performance of the gold particles can be maintained even in an atmosphere containing carbon monoxide.

Furthermore, it is found that more excellent catalyst performance is given when a specific metal or oxide thereof is used in addition to the gold fine particles and when a precious metal component is used in addition to the gold fine particles.

According to the present invention, an anode catalyst for a fuel cell comprises gold fine particles.

Further, according to the present invention, an anode catalyst for a fuel cell comprises a conductive support on which gold fine particles are coated.

Furthermore, according to the present invention, an anode catalyst for a fuel cell comprises gold fine particles and at least one member selected from the group consisting of titanium, vanadium, gallium, zirconium, niobium, cerium, tantalum, indium and the oxides of these metals.

In the anode catalyst for a fuel cell, the gold fine particles and the at least one member selected from the group consisting of titanium, vanadium, gallium, zirconium, niobium, cerium, tantalum, indium and the oxides of these metals may be coated on the conductive support.

According to the present invention, an anode catalyst for a fuel cell comprises gold fine particles and at least one member selected from the group consisting of platinum, ruthenium, and ruthenium oxides.

In the anode catalyst for a fuel cell, the gold fine particles and the at least one member selected from the group consisting of platinum, ruthenium, and ruthenium oxides may be coated on a conductive support.

Further, according to the present invention, an anode catalyst for a fuel cell comprises gold fine particles, at least one member selected from the group consisting of titanium, vanadium, gallium, zirconium, niobium, cerium, tantalum, indium, and the oxides of these metals, and at least one member selected from the group consisting of platinum, ruthenium, and ruthenium oxides.

In the anode catalyst for a fuel cell, the gold fine particles, the at least one member selected from the group consisting of titanium, vanadium, gallium, zirconium, niobium, cerium, tantalum, indium, and the oxides of these metals, and the at least one member selected from the group consisting of platinum, ruthenium, and ruthenium oxides are coated on a conductive support.

The anode catalyst for a fuel cell may be carbon.

Further, according to the present invention, a fuel cell includes an anode which contains the anode catalyst defined above.

Furthermore, according to the present invention, a proton exchange membrane fuel cell has an electrode junction body in which an anode and a cathode are joined at one end of a proton exchange membrane and the other end thereof, respectively, wherein an anode catalyst is the catalyst defined above.

In the fuel cell, the anode may have a structure in which a catalyst layer containing the catalyst which is defined above as a catalyst element is laminated on a catalyst layer which contains platinum as a catalyst element.

The present invention will become more apparent from the following detailed description of the embodiments and examples of the present invention.

### Description of the Drawings

Fig. 1 shows the result of the electrochemical experiment according to the Embodiment 1;
Fig. 2 shows the result of the electrochemical experiment according to the Embodiment 2.
Fig. 3 shows the result of the electrochemical experiment according to the Embodiment 3; and
Fig. 4 shows the result of the electrochemical experiment according to the Embodiment 4.

### Detailed Description of the Invention

Embodiments of the present invention will be described below with reference to the accompanying drawings.

### Catalyst Comprising Gold Fine Particles

An anode catalyst for a fuel cell according to the present invention contains gold fine particles as an active ingredient. The anode catalyst for a fuel cell which contains the gold fine particles as an active element has excellent catalyst activities in anode reactions in the fuel cell and can maintain the excellent catalyst activities for a long time even in the presence of carbon monoxide

It is desirable that the average particle diameter of the gold fine particles is preferably about less than 100 nm, more preferably about 30nm. There is no restriction on the lower limit value of the average particle diameter, but it may be about 1 nm from the viewpoint of the physical stability. The average particle diameter of the gold fine particles in the catalyst is obtained based on the arithmetic average of diameters of arbitrarily selected 100 gold fine particles by using a transmission electron microscope (TEM).

A gold fine particles can further improve the catalyst activities by coating them on a conductive support.

Carbon, titanium, niobium, tantalum, and the like can be used as the conductive support. Though a perfluoro type sulfonic acid film which is a typical proton exchange membrane (a proton conductive film) is acidic, these conductive supports have excellent conductivity and are stable in an acid atmosphere. As for the shape of the conductive support, there is no restriction. For example, it may be a fiber, cloth, or sheet shape. It is molded in various forms in advance.

Carbon is especially desirable in the conductive supports described above. Though a known electrode catalyst support made of carbon can be used, the specific surface area thereof is preferably 25-1500 cm²/g, more preferably 50-1500 cm²/g. As such carbon materials, furnace black, acetylene black or the like which is conductive carbon black is suitable, in particular, carbon blacks sold as DENKA BLACK, VULCAN, BLACK PEARL, and so on in the market can be used.

The amount of the gold fine particles to be coated is preferably about 1-300 parts by weight, more preferably about 5-120 parts by weight where that of the conductive support is 100 parts by weight.

There is specially no limitation as to a method for coating the gold fine particles, and therefore, a known coating method can be used. As the coating method, for example, 1) an impregnation method, 2) a gold reduction-adhesion/deposition method in which various reducing agents are used, 3) a gold reduction-adhesion/deposition method by light emission, 4) a deposition/precipitation method by pH control neutralization 5) an organic gold complex absorption method in a gaseous phase 6) an organic gold complex absorption method 7) a Physical Vapor Deposition method (PVD) in a gaseous phase, 8) a vacuum deposition method, or 9) ion injection method can be used. There is no limitation on the conditions of these methods, therefore, it is possible to set the condition so as to obtain the intended gold fine particles support.

Depending on the coating method used, the gold compound which is used as raw material can be selected from a water-soluble gold compound such as gold chloride, aurichloride etc., an organic-solvent-soluble compound such as gold Acetylacetonate, chloro(triphenylarsine)gold (I) [AuCl[P(C₆H₅)₃]] etc., sublimation compound such as gold Acetylacetonate or various inorganic and organic gold complex compounds.

### Catalyst Containing Additive Agent Components

In the catalyst for a fuel cell according to the present invention, it is possible to improve the catalyst activities by, containing, as active ingredient(s) (component(s)), in addition to the gold fine particles, at last one component (refer to as an additive agent component(s)) selected from the group consisting of titanium, vanadium, gallium, zirconium, niobium, cerium, tantalum, indium and the oxides of these metals.

The additive agent component(s) is preferably fine particles in shape, and an average particle diameter thereof is preferably about 5 nm to 50 pm, more preferably about 10 nm to 1 µm is more desirable.

The amount of the additive agent component(s) to be used is preferably about 0.1 to 10,000 parts by weight, preferably about 1 to 200 parts by weight when the amount of gold fine particles is 100 parts by weight.

The gold fine particles and the above additive agent component(s) can be used after they are mixed fully. Especially, it is possible to improve the catalyst activities by coating the gold fine particles and the additive agent component(s) on the conductive support in a state where the gold fine particles and the additive agent component(s) are in contact with each other.

As the conductive support, the support for coating the gold fine particles described above and the like can be used.

As for the order of coating the gold fine particles and the additive agent component(s) on the conductive support, there is specifically no limitation. For example, 1) a method for coating the additive agent component(s) after coating the gold fine particles on the support, 2) a method for coating the gold fine particles after coating the additive agent component(s) on the support, 3) a method for coating the gold fine particles and the additive agent component(s) on the support at the same time, or 4) a method for coating the gold fine particles and the additive agent component(s) on the support after coating the gold fine particles on the additive agent component(s), is used in the present invention.

As for the method for coating the additive agent component(s), there is no limitation particularly, and it is possible to use a know method. For example, as the coating method, 1) an impregnation method, 2) a coprecipitation method 3) a metal alkoxide hydrolysis method 4) an organic metal complex absorption method, 5) an organic metal complex absorption method in a gaseous phase 6) a Physical Vapor Deposition method (PVD) in a gaseous phase, 7) a vacuum deposition method, or 8) an ion injection method and so on can be used.

In those methods, depending on the method used, a compound(s) which is used as raw material can be selected from a water-soluble compound, an organic-solvent-soluble compound, a sublimation compound, and various inorganic and organic gold complex compounds.

As to the coating amount of the gold fine particles and the additive agent component(s), the total amount of the gold fine particles and the additive agent component(s) to be coated is preferably about 1 to 300 parts by weight, more preferably, about 5 to 120 parts by weight when the conductive support is 100 parts by weight. Catalyst Containing Precious Metal Components

The catalyst gold fine particles containing a precious metal component may be mixed with at least one member (hereinafter referred to as, "precious metal component") selected from the group consisting of platinum, ruthenium, and ruthenium oxides.

These precious metal components themselves have the catalyst activities as a catalyst for a fuel cell. By the precious metal components, the amount of the precious metal components to be used can be reduced, sufficiently maintaining the catalyst activities, when the precious metal component(s) are mixed with the gold fine particles. The decline of the catalyst activities in the presence of carbon monoxide can be controlled by using the gold fine particles together.

The precious metal component(s) has preferably fine particles shape, and it is desirable that an average particle diameter is about 1 nm to 30 nm, more preferably about 1 nm to 5 nm.

The amount of the gold fine particles to be used is about 1 to 500 pats by weight, and more preferably about 10 to 100 parts by weight when that of precious metal component is 100 parts by weight.

Although the gold fine particles and the above precious metal component(s) can be used after fully mixed, it is possible to improve the catalyst activities by coating the gold fine particles and the precious metal component(s) on the conductive support.

As for the order of coating the gold fine particles and the precious metal component(s) on the conductive support, there is specifically no limitation. For example, 1) a method for coating the precious metal component(s) after coating the gold fine particles on the support, 2) a method for coating the gold fine particles after coating the precious metal component(s) on the support, or 3) a method for coating the gold fine particles and the precious metal component(s) on the support at the same time can be used.

As for the method for coating the precious metal component(s), there is no limitation particularly, and it is possible to use a know method. For example, as the coating method, 1) an impregnation method, 2) a coprecipitation method 3) an organic metal complex absorption method, 4) an organic metal complex absorption method in a gaseous phase 5) a Physical Vapor Deposition method (PVD) in a gaseous phase, 6) a vacuum deposition method, or 7) an ion injection method and so on can be used. In those methods, depending on the method used, a compound(s) which is used as raw material can be selected from a water-soluble compound, an organic-solvent-soluble compound, a sublimation compound, and various inorganic and organic gold complex compounds.

As to the coating amount of the gold fine particles and the precious metal component(s), the total amount of the gold fine particles and the precious metal component(s) to be coated is preferably about 1 to 300 parts by weight, more preferably, about 5 to 120 parts by weight when the conductive support is 100 parts by weight.

### Catalyst Containing Additive Agent Component(s) and Precious Metal Component(s)

Further, the catalyst according to the present invention may, at the same time, as active components, contain 3 kinds of components, (1) gold fine particles, (2) at last one component (an additive agent component(s)) selected from the group consisting of titanium, vanadium, gallium, zirconium, niobium, cerium, tantalum, indium and the oxides of these metals, and (3) at least one components (a precious metal component) selected from the group consisting of the group consisting of platinum, ruthenium, and ruthenium oxides. In case that the catalyst contains those three kinds of components (1) to (3), it is possible to reduce the precious metal components, and improve the catalyst activities and further, it is possible to control reduction of the catalyst activities in the presence of carbon monoxide.

As to the amount of the gold fine particles, the additive agent component(s) and the precious metal components, the precious metal component(s) and the additive agent component(s) to be used is preferably about 0.1 to 10,000 parts by weight (preferably about 1 to 200 parts by weight), about 1 to 500 pats by weight (preferably 10 to 100 parts by weight) respectively, when the amount of gold fine particles is 100 parts by weight.

Although the gold fine particles, the precious metal component(s), and the above precious metal component(s) can be used after fully mixed, it is possible to improve the catalyst activities by coating these three kinds of components on the conductive support.

As for the order of coating the gold fine particles, the additive agent component(s), and the precious metal component(s) on the conductive support, there is specifically no limitation. Those three kinds of components may be coated on the conductive support at the same time. They may be coated in any order one after another on the conductive support. Moreover, the gold fine particles may be coated on the additive agent component(s) and then these gold fine particles and additive agent components may be coated on the conductive support.

As for the method for coating these components, the various appropriate methods described above can be applied.

As to the coating amount of the gold fine particles, the additive agent component(s), and the precious metal components, the total amount of the gold fine particles, the additive agent component(s), and the precious metal components to be coated is preferably about 1 to 300 parts by weight, more preferably, about 5 to 120 parts by weight when the conductive support is 100 parts by weight.

### Fuel Cell

The catalyst according to the present invention is effective as a catalyst for an anode (a fuel electrode) of a fuel cell. As for the shape etc. of the fuel cell, there is specially no limitation, and it is possible to use a formed body (hereinafter referred to as a membrane electrode assembly) made by making the anode (the fuel electrode) and a cathode (an oxygen electrode) stick together on an ion conductive body whose shape is arbitrary. Especially, utility is especially high as a catalyst for an anode of a proton-exchange membrane fuel cell comprising a membrane electrode assembly in which the anode (the fuel electrode) and the cathode (the oxygen electrode) are joined on both sides of the solid polymer type proton conductor which is sold as "NAFION" (Trademark of DUPONT). It is possible to, in a suitable form, use such a membrane electrode assembly as a fuel cell for a small size power supply of a portable personal computer, a portable terminal, a cellular phone and so on.

The structure of the fuel cell which uses the catalyst according to the present invention may be the same as that of a known fuel cell, and as the ion conductor and the cathode (the oxygen electrode), a known ion conductor and cathode can be used.

In order to form the anode by using the catalyst according to the present invention, in case of using the catalyst coated on the conductive support, since the support itself functions as current collector material, it is possible to form a catalyst layer on the anode side of the ion conductor by adding a binder, if necessary. In case that the catalyst is not coated on the conductive support, current corrector material such as carbon etc. can be added to the catalyst according to the present invention, and if necessary, a binder is mixed with it, so as to form a catalyst layer on the anode side of the ion conductor. There is specifically no limitation on the thickness of the anode (the catalyst layer). The thickness of the anode may be about 2 to 100µm.

As an anode by using the catalyst according to the present invention, a bilayer structure catalyst layer in which a platinum catalyst layer is formed, and then the catalyst layer according to the present invention is formed on the platinum catalyst layer, can be formed. Since in such a bilayer structure catalyst layer, the surface thereof is made of the catalyst layer using the catalyst according to the present invention, even though hydrogen including monoxide is used as fuel, the monoxide is resolved before the monoxide contacts with the platinum catalyst thereby preventing deterioration of platinum catalyst performance by the absorption of the oxygen and maintaining the function of platinum catalyst for a long time. In the bilayer structure catalyst layer, a known platinum catalyst can be used as it is. There is no limitation on the thickness of the catalyst layer whose catalyst component is platinum. Usually, the thickness thereof is preferably about 2 to 100µm, and more preferably about 5 to 30µm. Since in such a bilayer structure catalyst layer, the catalyst layer including the gold fine particles is formed, even though the thickness of the catalyst layer whose catalyst component is platinum is smaller than that of a conventional one, it is possible to achieve the same or more catalyst performance. There is no limitation on the thickness of the catalyst layer using the catalyst according to the present invention if it is thick enough to cover the surface of the catalyst layer whose catalyst component is platinum. The thickness thereof is usually about 2 to 50µm, more preferably 5 to 30µm. Method for Generating Electricity

It is possible to generate electricity by using fuel gas including hydrogen in the fuel cell using the catalyst according to the present invention. There is no limitation on hydrogen concentration in the fuel. For example, it may be about 0.1 to 100 volume percent in the fuel. The fuel may contain, for example, steam, carbon dioxide, or nitrogen gas as other gas component(s). Furthermore, in case of using the platinum catalyst component, the fuel may contain carbon monoxide which is known as a component that remarkably deteriorates the electricity generation performance of the electrode catalyst. The fuel gas may contain a small amount of oxygen (for example, about less than 10 volume percent to hydrogen), or a small amount of the air (for example, about less than 50 volume percent to hydrogen) together.

There is no limitation on a manufacturing method of the fuel gas containing hydrogen. For example, it is possible to use the fuel gas made by reforming petroleum, coal, hydrocarbon originating in natural gas, and so on.

In order to generate electricity by using hydrogen as fuel, the catalyst according to the present invention and the hydrogen are usually brought into contact with each other at a room temperature (about 25 degrees Celsius) to about 150 degrees Celsius, more preferably, about 60 to 100 degrees Celsius, although depending on the conditions such as the concentration of the hydrogen which is fuel, the content of the gold fine particles, coexistent components in the gas, and so on. There is no limitation on the pressure of fuel containing hydrogen. For example, the ordinary pressure (about 0.1 MPa) to high pressure (about 1 MPa) condition can be adapted. It is possible to circulate the hydrogen containing gas which is fuel. It is also possible to increase the rate of hydrogen used for the electricity generation.

The catalyst according to the present invention has excellent catalyst activities as an anode catalyst for a fuel cell, and is less expensive compared with platinum. Further catalyst according to the present invention is capable of maintaining the excellent catalyst activities even in an atmosphere containing carbon monoxide. In the anode having a structure in which the catalyst layers, one of which includes the catalyst according to the present invention, are laminated, it is possible to achieve the same or more catalyst performance and further, to control the deterioration of the catalyst activities due to the absorption of the carbon monoxide even though the thickness of the catalyst layer containing platinum is smaller than that of the conventional catalyst layer.

Description of embodiments according to the present invention will be given to more clearly show the characteristics of the present invention.

### EMBODIMENT 1

Liquid A was obtained by adding 100 ml of isopropyl alcohol to 6.25 g of a gold colloidal solution (PERFECT GOLD, (Trademark) manufactured by VACUUM METALLURGICAL CO., LTD.: the content of the gold is 8 percent by weight, the average particle diameter of the gold is 6 nm, and a dispersion solvent is α-terpineol).
The Liquid A to which 0.5 g of carbon black powder (VALCAN XC-72R (Trademark) manufactured by CABOT CORPORATION) was added was stirred for 30 minutes. The solution was transferred to an eggplant-shaped flask which was then attached to a rotary evaporator apparatus. The pressure thereof was reduced while the solution was stirred at 60 degrees Celsius, thereby removing the solvent to obtain powder. The obtained powder was dried for four hours at 150 degrees Celsius in vacuo by a vacuum drier. A silica tube was filled with this powder and treated with heat at 450 degrees Celsius for two hours while nitrogenous gas was circulated, and then treated with heat at 450 degrees Celsius for two hours while nitrogenous gas containing hydrogen (10 volume percent) was circulated thereby obtaining a gold immobilized carbon catalyst (the catalyst NO.1 according to the present invention: Au/C, the content of the gold is 50 percent by weight).

The electrochemical characteristics of the obtained gold immobilized carbon catalyst was evaluated by the method described below.

First, 10 mg of the powder of the gold immobilized carbon catalyst was put in 5 ml of distilled water, and then supersonic waves were impressed thereto so that the powder was dispersed and then, 3 µl of the dispersed solution was collected, and dropped on a glassy carbon electrode (whose inner diameter is 3 mm) which had been ground like a mirror surface, and then dried at 70 degrees Celsius for 30 minutes in the drier. Next, 10µl of a conductive resin solution (NAFION (Trademark) manufactured by DUPONT: The content thereof is a 2.5 percent by weight ethanol solution) was dropped thereon and dried so as to immobilize it at 150 degrees Celsius for one hour thereby making an Au/C testing electrode.

Electrochemical experiments of the obtained Au/C testing electrode was conducted in the method described below, using a three-electrode type electrochemical cell in 0.5 mol/l of aqueous sulfuric acid solution at a room temperature.

First, the oxygen in the solution was removed by an argon gas bubbling treatment in aqueous sulfuric acid solution, and the surface of the Au/C testing electrode was washed by potential sweeping (Electric potential scanning range : 0.05 to 1.00V, a scanning speed : 20m V/s)over ten times.

The argon gas was switched to testing gas (hydrogen or hydrogen-carbon monoxide mixed gas) while maintaining 0.05 V potential of the testing electrode, and then, after bubbling treatment was carried out thereto for 10 minutes, current value was measured by changing the potential

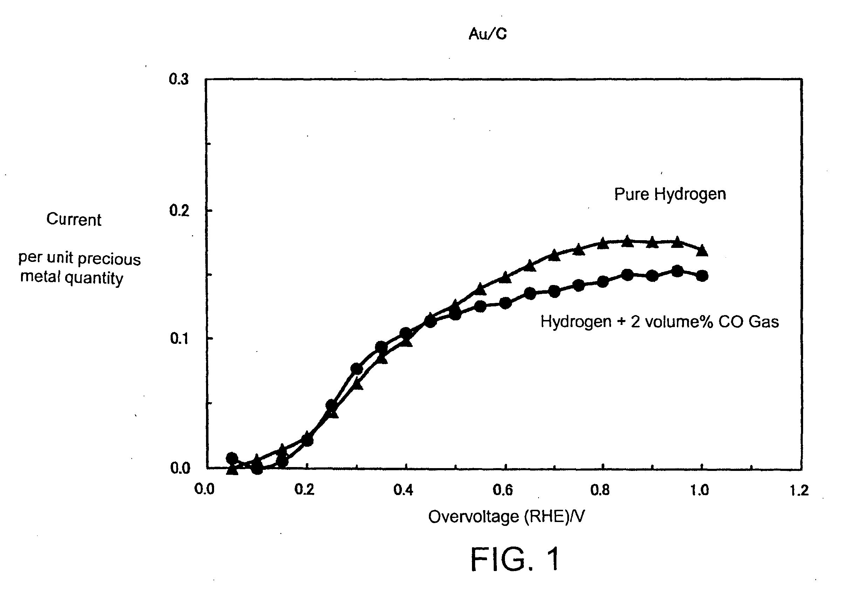

Fig. 1 shows the current and potential measured when the hydrogen gas, and the hydrogen (98 volume percent) and carbon monoxide (2 volume percent) mixed gas were circulated in the Au/C testing electrode (Catalyst No. 1 according to the present invention). The electric potential value is written based on the RHE (reversible hydrogen electrode) standard.

In both cases where the hydrogen gas was circulated and where the hydrogen-carbon monoxide mixed gas was circulated, the current value (the vertical axis) started to increase from about 0.2 V and then increases monotonously to the potential. This result shows that even though the hydrogen gas containing the carbon monoxide together is used, electricity can be generated.

### EMBODIMENT 2

Liquid A was obtained by adding 100 ml of isopropyl alcohol to 4.16 g of a gold colloidal solution (PERFECT GOLD, (Trademark) manufactured by VACUUM METALLURGICAL CO., LTD.: the content of the gold is 8 percent by weight, the average diameter of the gold particles is 6 nm, and a dispersion solvent is α-terpineol). The Liquid A to which 0.667 g of carbon black powder (VALCAN XC-72R (Trademark) manufactured by CABOT CORPORATION) was added was stirred for 30 minutes. The solution was transferred to an eggplant-shaped flask which was then attached to the rotary evaporator apparatus. The pressure thereof was reduced while the solution was stirred at 60 degrees Celsius, thereby removing the solvent to obtain powder. The obtained powder was dried for four hours at 150 degrees Celsius in vacuo by a vacuum drier. A silica tube was filled with this powder and treated with heat at 450 degrees Celsius for two hours while nitrogenous gas containing hydrogen (10 volume percent) was circulated, and then treated with heat at 450 degrees Celsius for two hours while nitrogenous gas was circulated thereby obtaining a gold immobilized carbon catalyst (Au/C, the content of the gold is 33.3 percent by weight).

On the other hand, 0.890 g of titanium (IV) isopropoxide (Ti[OCH(CH₃)₂]₄) was dissolved in 100 ml of isopropanol thereby obtaining Liquid B. The Liquid B to which 0.75 g of the gold immobilized carbon catalyst (Au/C, the content of the gold is 33.3 percent by weight) was added was stirred for 30 minutes. The solution was transferred to an eggplant-shaped flask which was then attached to the rotary evaporator apparatus. The pressure thereof was reduced while the solution was stirred at 60 degrees Celsius, thereby removing the isopropanol to obtain powder. The obtained powder was exposed to the ambient air for four hours at 70 degrees Celsius in a drier so as to be hydrolyzed. Next, a silica tube was filled with the obtained powder and treated with heat at 450 degrees Celsius for two hours while nitrogenous gas was circulated, and then treated with heat at 450 degrees Celsius for two hours while nitrogenous gas containing hydrogen (10 volume percent) was circulated thereby obtaining a titanium oxide and gold immobilized carbon catalyst (Catalyst NO.2 according to the present invention: TiO₂/Au/C, the content of titanium oxide is 25 percent by weight and the content of gold is 25 percent by weight).

In the similar manner to that described above, Liquid C was obtained by adding 100 ml of isopropyl alcohol to 3.13 g of a gold colloidal solution (PERFECT GOLD, (Trademark) manufactured by VACUUM METALLURGICAL CO., LTD.: the content of the gold is 8 percent by weight, the average diameter of the gold particles is 6 nm, and a dispersion solvent is α-terpineol). To the Liquid C, 0.750 g of carbon black powder (VALCAN XC-72R (Trademark) manufactured by CABOT CORPORATION) was added and stirred for 30 minutes. The solution was transferred to an eggplant-shaped flask which was then attached to the rotary evaporator apparatus. The pressure thereof was reduced while the solution was stirred at 60 degrees Celsius, thereby removing the solvent to obtain powder. fThe obtained powder was dried for four hours at 150 degrees Celsius in vacuo by a vacuum drier.
A silica tube was filled with the obtained powder and treated with heat at 450 degrees Celsius for two hours while nitrogenous gas containing hydrogen (10 volume percent) was circulated, and then treated with heat at 450 degrees Celsius for two hours while nitrogenous gas was circulated thereby obtaining a gold immobilized carbon catalyst (Au/C, the content of gold is 25 percent by weight).

On the other hand, 1.34 g of titanium (IV) isopropoxide (Ti[OCH(CH₃)₂]₄) was dissolved in 150 ml of isopropanol thereby obtaining Liquid D. The solution to which 0.75 g of the gold immobilized carbon catalyst (Au/C, the content of the gold is 25 percent by weight) was added was stirred for 30 minutes. The solution was transferred to an eggplant-shaped flask which was then attached to the rotary evaporator apparatus. The pressure thereof was reduced while the solution was stirred at 60 degrees Celsius, thereby removing the isopropanol to obtain powder. The obtained powder was exposed to the ambient air for four hours at 70 degrees Celsius in a drier so as to be hydrolyzed. Next, a silica tube was filled with the obtained powder and treated with heat at 450 degrees Celsius for two hours while nitrogenous gas was circulated, and then treated with heat at 450 degrees Celsius for two hours while nitrogenous gas containing hydrogen (10 volume percent) was circulated thereby obtaining a titanium oxide and gold immobilized carbon catalyst (Catalyst NO.3 according to the present invention: TiO₂/Au/C, the content of titanium oxide is 33.3 percent by weight and the content of gold is 16.7 percent by weight).

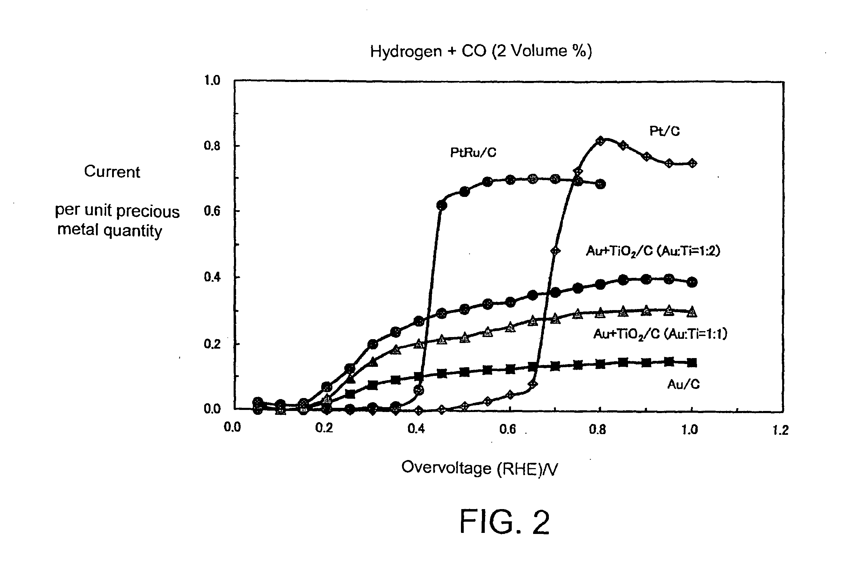

Testing electrodes were prepared in the similar manner to that of the Embodiment 1 by using Catalyst Nos. 2 and 3 according to the present invention which was produced in the manner described above, and hydrogen (98 volume percent) and carbon monoxide (2 volume percent) mixed gas was circulated therein so that electrochemical characteristics thereof are measured. The similar measurement was made by using, as comparative catalysts, platinum and ruthenium immobilized carbon catalyst (Comparative Example Catalyst NO.1: PtRu/C, HiSPEC 7000 (Trademark) manufactured by JOHNSON MATTHEY INC., the content of the platinum is 30 percent by weight, and the content of the ruthenium is 15 percent by weight) sold in the market and platinum immobilized carbon catalyst (Comparative Example Catalyst NO. 2: Pt/C, HiSPEC 4000, (Trademark) manufactured by JOHNSON MATTHEY INC., the content of platinum is 40 percent by weight) sold in the market. In Fig. 2 the results are shown. It is observed that from Fig. 2, in case of the TiO₂/Au/C catalyst, compared with the other catalysts, it is possible to generate electricity at lower voltage.

### EMBODIMENT 3

Liquid A was obtained by adding 100 ml of isopropyl alcohol to 3.13 g of a gold colloidal solution (PERFECT GOLD, (Trademark) manufactured by VACUUM METALLURGICAL CO., LTD.: the content of the gold is 8 percent by weight, the average diameter of the gold particles is 6 nm, and a dispersion solvent is α-terpineol). The Liquid A to which 0.750 g of carbon black powder (VALCAN XC-72R (Trademark) manufactured by CABOT CORPORATION) was added was then stirred for 30 minutes. The solution was transferred to an eggplant-shaped flask which was then attached to the rotary evaporator apparatus. The pressure thereof was reduced while the solution was stirred at 60 degrees Celsius, thereby removing the solvent to obtain powder. The obtained powder was dried for four hours at 150 degrees Celsius in vacuo by a vacuum drier. A silica tube was filled with the obtained powder and treated with heat at 450 degrees Celsius for two hours while nitrogenous gas containing hydrogen (10 volume percent) was circulated, and then treated with heat at 450 degrees Celsius for two hours while nitrogenous gas was circulated thereby obtaining a gold immobilized carbon catalyst (Au/C, the content of gold is 25 percent by weight).

On the other hand, 0.69g of tantalum (V) ethoxide (Ta[OC₂H₅]₅) was dissolved in 100 ml of ethanol thereby obtaining Liquid B. The solution to which 0.75 g of the gold immobilized carbon catalyst (Au/C, the content of the gold is 25 percent by weight) was added was stirred for 30 minutes. The solution was transferred to an eggplant-shaped flask which was then attached to the rotary evaporator apparatus. The pressure thereof was reduced while the solution was stirred at 50 degrees Celsius, thereby removing the ethanol to obtain powder. The obtained powder was exposed to the ambient air for four hours at 70 degrees Celsius in a drier so as to be hydrolyzed. Next, a silica tube was filled with the obtained powder and treated with heat at 450 degrees Celsius for two hours while nitrogenous gas was circulated, and then treated with heat at 450 degrees Celsius for two hours while nitrogenous gas containing hydrogen (10 volume percent) was circulated thereby obtaining a tantalum oxide and gold immobilized carbon catalyst (Catalyst NO.4 according to the present invention: Ta₂O₅/Au/C, the content of the tantalum oxide is 33.3 percent by weight and the content of gold is 16.7 percent by weight).

In the same way, 0.90 g of Niobium (V) ethoxide (Nb[OC₂H₅]₅) was dissolved in 100 ml of ethanol thereby obtaining Liquid C. The solution to which 0.75 g of the gold immobilized carbon catalyst (Au/C, the content of the gold is 25 percent by weight) was added was stirred for 30 minutes. The solution was transferred to an eggplant-shaped flask which was then attached to the rotary evaporator apparatus. The pressure thereof was reduced while the solution was stirred at 50 degrees Celsius, thereby removing the ethanol to obtain powder. The obtained powder was exposed to the ambient air for four hours at 70 degrees Celsius in a drier so as to be hydrolyzed. Next, a silica tube was filled with the obtained powder and treated with heat at 450 degrees Celsius for two hours while nitrogenous gas was circulated, and then treated with heat at 450 degrees Celsius for two hours while nitrogenous gas containing hydrogen (10 volume percent) was circulated thereby obtaining a niobium oxide and gold immobilized carbon catalyst (Catalyst NO.5 according to the present invention: Nb₂O₅/Au/C, the content of the niobium oxide is 33.3 percent by weight and the content of gold is 16.7 percent by weight).

In the same way, 0.826g of zirconium (IV) ethoxide (Zr[OC₂H₅]₄) was dissolved in 100 ml of isopropanol, thereby obtaining Liquid D. The solution to which 0.75 g of the gold immobilized carbon catalyst (Au/C, the content of the gold is 25 percent by weight) was added was stirred for 30 minutes. The solution was transferred to an eggplant-shaped flask which was then attached to the rotary evaporator apparatus. The pressure thereof was reduced while the solution was stirred at 60 degrees Celsius, thereby removing the isopropanol to obtain powder. The obtained powder was exposed to the ambient air for four hours at 70 degrees Celsius in a drier so as to be hydrolyzed. Next, a silica tube was filled with the obtained powder and treated with heat at 450 degrees Celsius for two hours while nitrogenous gas was circulated, and then treated with heat at 450 degrees Celsius for two hours while nitrogenous gas containing hydrogen (10 volume percent) was circulated thereby obtaining a zirconium oxide and gold immobilized carbon catalyst (Catalyst NO.6 according to the present invention: ZrO₄/Au/C, the content of the zirconium oxide is 33.3 percent by weight and the content of gold is 16.7 percent by weight).

In the same way, 0.946 g of cerium nitrate (Ce[NO₃]₃· 6H₂O) was dissolved in 100 ml of distilled water 100m 1 thereby obtaining Liquid E. The solution to which 0.75 g of the gold immobilized carbon catalyst (Au/C, the content of the gold is 25 percent by weight) was added was stirred for 30 minutes. The solution was transferred to an eggplant-shaped flask which was then attached to the rotary evaporator apparatus. The pressure thereof was reduced while the solution was stirred at 60 degrees Celsius, thereby removing the water to obtain powder. The obtained powder was exposed to the ambient air for four hours at 70 degrees Celsius in a drier so as to be hydrolyzed. Next, a silica tube was filled with the obtained powder and treated with heat at 450 degrees Celsius for two hours while nitrogenous gas was circulated, and then treated with heat at 450 degrees Celsius for two hours while nitrogenous gas containing hydrogen (10 volume percent) was circulated thereby obtaining a cerium oxide and gold immobilized carbon catalyst (Catalyst NO.7 according to the present invention: CeO₂/Au/C, the content of the cerium oxide is 33.3 percent by weight and the content of gold is 16.7 percent by weight).

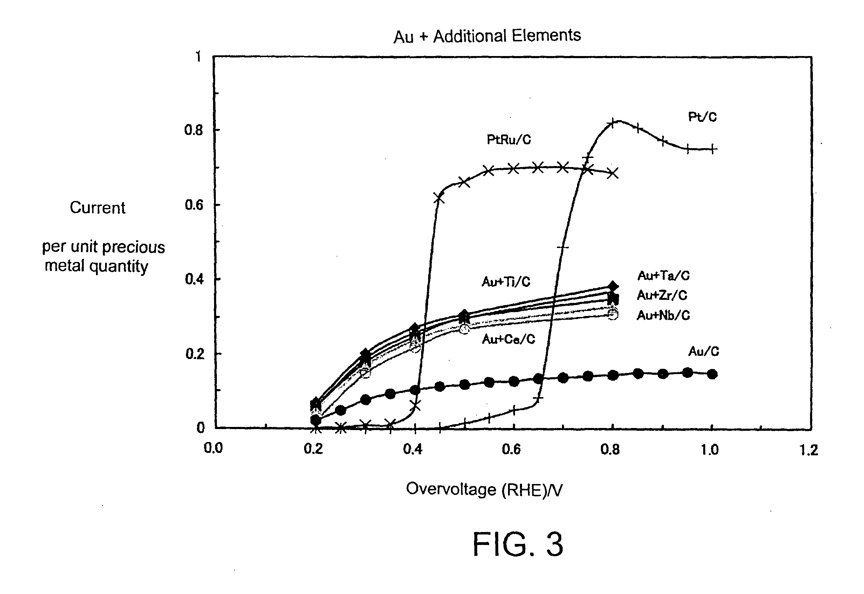

Testing electrodes were prepared in the similar manner to that of the Embodiment 1 by using these Catalysts described above according to the present invention, and hydrogen (98 volume percent) and carbon monoxide (2 volume percent) mixed gas was circulated therein so that electrochemical characteristics thereof are measured. A result is shown in the Fig. 3. It is observed that from Fig. 3, in case of the Ta₂O₅/Au/C catalyst, the Nb₂O₅/Au/C catalyst, the ZrO₂/Au/C catalyst, and the CeO₂/Au/C catalyst as well as the TiO₂/Au/C catalyst, compared with the other catalysts, it is possible to generate electricity at lower voltage.

### EMBODIMENT 4

Liquid A was obtained by adding 100 ml of isopropyl alcohol to 3.13 g of a gold colloidal solution (PERFECT GOLD, (Trademark) manufactured by VACUUM METALLURGICAL CO., LTD.: the content of the gold is 8 percent by weight, the average particle diameter of the gold is 6 nm, and a dispersion solvent is α-terpineol). The Liquid A to which 0.750 g of carbon black powder (VALCAN XC-72R (Trademark) manufactured by CABOT CORPORATION) was added was stirred for 30 minutes. The solution was transferred to an eggplant-shaped flask which was then attached to the rotary evaporator apparatus. The pressure thereof was reduced while the solution was stirred at 60 degrees Celsius, thereby removing the solvent to obtain powder. The obtained powder was dried for four hours at 150 degrees Celsius in vacuo by a vacuum drier. The powder which it could get was dried with a vacuum drier in the right air, 150 degrees Celsius for 4 hours. A silica tube was filled with this powder and treated with heat at 450 degrees Celsius for two hours while nitrogenous gas containing hydrogen (10 volume percent) was circulated, and then treated with heat at 450 degrees Celsius for two hours while nitrogenous gas was circulated thereby obtaining a gold immobilized carbon catalyst (Au/C, the content of the gold is 25 percent by weight).

The test electrode having a 2 layer structure was made by using the gold immobilized carbon catalyst and a platinum immobilized carbon catalyst in a manner described below.

As the platinum immobilized carbon catalyst, a commercially available catalyst (Comparative Example Catalyst No.2: Pt/C, HiSPEC 4000 (Trademark) manufactured by JOHNSON MATTHEY INC., the content of the platinum is 40 percent by weight) was used.

First, 10 mg of the powder of the platinum immobilized carbon catalyst(Comparative Example Catalyst No. 2: Pt/C) was put in 5 ml of distilled water, and then supersonic waves were impressed thereto so that the powder was dispersed. Then, 3µl of the dispersed solution was collected, and dropped on a glassy carbon electrode (whose inner diameter is 3 mm) which had been ground like a mirror surface, and then dried at 70 degrees Celsius for 30 minutes in the drier. First, 10 mg of the powder of the gold immobilized carbon catalyst (Au/C, the content of the gold is 25 percent by weight) was put in 5 ml of distilled water, and then supersonic waves were impressed thereto so that the powder was dispersed. Then, 3µl of the dispersed solution was collected, and dropped on the portion where the platinum immobilized carbon catalyst had been dropped and dried, and then dried at 70 degrees Celsius for 30 minutes in the drier. Next, 10µl of a conductive resin solution (NAFION (Trademark) manufactured by DUPONT: The content thereof is a 2.5 percent by weight ethanol solution) was dropped thereon and dried so as to immobilize it at 150 degrees Celsius for one hour thereby making a testing electrode having an Au/Pt 2 layer structure (Au/Pt/C testing electrode) in which an Au catalyst layer was formed on a Pt catalyst layer.

On the other hand, 10 mg of the powder of the platinum immobilized carbon catalyst (Comparative Example Catalyst No. 2: Pt/C) was put in 5 ml of distilled water, and then supersonic waves were impressed thereto so that the powder was dispersed. Then, 3 µl of the dispersed solution was collected, and dropped on a glassy carbon electrode (whose inner diameter is 3 mm) which had been ground like a mirror surface, and then dried at 70 degrees Celsius for 30 minutes in the drier. Then, 3 µl of the dispersed solution of this platinum immobilized carbon catalyst was collected, and dropped on the portion where the platinum immobilized carbon catalyst had been dropped and dried, then dried at 70 degrees Celsius for 30 minutes in the drier. Next, 10µl of a conductive resin solution (NAFION (Trademark) manufactured by DUPONT: The content thereof is a 2.5 percent by weight ethanol solution) was dropped thereon and dried so as to immobilize it at 150 degrees Celsius for one hour thereby making an Pt/C testing electrode.

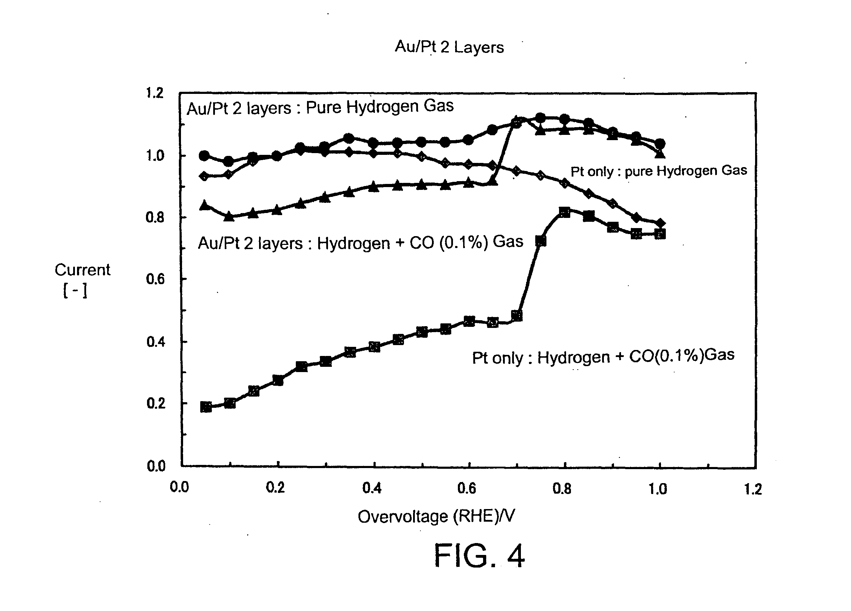

In the Au/Pt/C testing electrode and the Pt/C testing electrode obtained by the method described above, electrochemical characteristics were measured by circulating pure hydrogen and hydrogen (99.9 volume percent)-carbon monoxide (0.1 volume percent) mixed gas. In Fig. 4 the results are shown. A result is shown in the figure 4. It is observed that from Fig. 4, in the Au/Pt electrode having the 2 layer structure, it is possible to generate electricity by the hydrogen even though the hydrogen contains the carbon monoxide.

Although only some exemplary embodiments of this invention have been described in detail above, those skilled in the art will readily appreciated that many modifications are possible in the exemplary embodiments without materially departing from the novel teachings and advantages of this invention. Accordingly, all such modifications are intended to be included within the scope of this invention. Further, the present invention possesses a number of advantages or purposes, and there is no requirement that every claim directed to that invention be limited to encompass all of them.

## Claims

1. An anode catalyst for a fuel cell comprising gold fine particles.

2. An anode catalyst for a fuel cell comprising a conductive support on which gold fine particles are coated.

3. An anode catalyst for a fuel cell comprising:
gold fine particles, and
at least one member selected from the group consisting of titanium, vanadium, gallium, zirconium, niobium, cerium, tantalum, indium and the oxides of these metals.

4. The anode catalyst according to claim 3, wherein the gold fine particles and the at least one member selected from the group consisting of titanium, vanadium, gallium, zirconium, niobium, cerium, tantalum, indium and the oxides of these metals is coated on a conductive support.

5. An anode catalyst for a fuel cell comprising gold fine particles and at least one member selected from the group consisting of platinum, ruthenium, and ruthenium oxides.

6. The anode catalyst for a fuel cell according to claim 5, wherein gold fine particles and at least one member selected from the group consisting of platinum, ruthenium, and ruthenium oxides is coated on a conductive support.

7. An anode catalyst for a fuel cell comprising:
gold fine particles;
at least one member selected from the group consisting of titanium, vanadium, gallium, zirconium, niobium, cerium, tantalum, indium, and the oxides of these metals; and
at least one member selected from the group consisting of platinum, ruthenium, and ruthenium oxides.

8. The anode catalyst according to claim 7, wherein the gold fine particles, the at least one member selected from the group consisting of titanium, vanadium, gallium, zirconium, niobium, cerium, tantalum, indium, and the oxides of these metals, and the at least one member selected from the group consisting of platinum, ruthenium, and ruthenium oxides are coated on a conductive support.

9. The anode catalyst according to any one of claims 2, 4, 6, or 8, wherein the conductive support is made of carbon.

10. A fuel cell comprising the anode catalyst according to any one of claims 1-9, further including an anode containing catalyst.

11. A solid polymer a fuel cell having an electrode junction body in which an anode and a cathode are joined at one end of a proton exchange membrane and the other end thereof, respectively, comprising: an anode catalyst according to any one of claims 1-9.

12. The fuel cell according to claims 10 or 11, wherein a catalyst layer whose catalyst component is the catalyst according to any one of claims 1-9 is formed on a platinum catalyst layer.
